**Europäisches Patentamt**

**European Patent Office**

**Office européen des brevets**

(19)

(11) Publication number : **0 474 473 A2**

## (12) EUROPEAN PATENT APPLICATION

(21) Application number : **91308094.1**

(22) Date of filing : **04.09.91**

(51) Int. Cl.⁵ : **G11B 7/26**

(30) Priority : **07.09.90 GB 9019542**

(43) Date of publication of application :
**11.03.92 Bulletin 92/11**

(84) Designated Contracting States :
**DE NL**

(71) Applicant : **GEC-Marconi Limited**
**The Grove Warren Lane**
**Stanmore Middlesex HA7 4LY (GB)**

(72) Inventor : **Bowry, Carolyn**
**202 Shefford Road**
**Clifton, Bedfordshire SG17 5QS (GB)**
Inventor : **Bonnett, Paul**
**19 Station Road**
**Epping, Essex CM16 4HG (GB)**

(74) Representative : **George, Sidney Arthur**
**The General Electric Company p.l.c. GEC**
**Patent Department(Wembley Office) Hirst**
**Research Centre East Lane**
**Wembley Middlesex, HA9 7PP (GB)**

(54) **Optical storage devices.**

(57)    In a process and apparatus for manufacturing an optical storage device, a film (4) of liquid crystal (LC) material, such as an LC polymer, is deposited on an elongate substrate (1), and the substrate is fed through a temperature-controlled region (5) in which the temperature of the film is raised above the glass transition temperature of the LC material and is subsequently lowered so that the material is initialised to an optimum light-scattering texture. The substrate may then be cut into sections, each for use as an optical storage device.

EP 0 474 473 A2

This invention relates to a process and apparatus for manufacturing optical storage devices such as microfilms, microforms and microfiches, and also larger recording media, such as A4 size sheets, using liquid crystalline materials.

Liquid crystals, in general, are unique materials which exhibit anisotropy of various physical properties, including refractive index and dielectric susceptibility. These properties allow liquid crystal (LC) materials to be controlled by electric fields and thereby to provide the responses commonly found in liquid crystal displays (LCDs).

Liquid crystal polymer (LCP) materials are a specific class of liquid crystal materials which exhibit these properties and additionally exhibit the potential advantages of conventional polymer materials, such as mechanical integrity and ease of processing.

LCP materials can be used as thermo-optic and photo-optic storage media. The application of LCPs in the area of optical recording is of particular interest and these electro-responsive materials further offer the prospect of erasability in recording media.

Unlike conventional LCs, LCP materials are high molecular weight materials which possess many of the properties of the actual plastics substrates which are used in plastic LCD manufacture. These electroactive polymers are thus more compatible with such substrates, particularly when correctly engineered with respect to their phase behaviour. The scope for molecular engineering is a further advantage of LCP materials, this scope being broader than for the low molar mass materials, since polymers can be copolymerised, crosslinked, plasticised and form interpenetrating networks, etc. Furthermore, because of the size of their molecules, LCPs do not possess the powerful solvent characteristics exhibited by conventional LC materials, which present problems when using organic substrates.

Although advantages of LCPs for optical recording applications have been identified, some fundamental problems exist in their use. The production of high optical quality LCP film of the purity which the electronics industry demands is difficult to achieve. The occurrence of pinholes and impurities in LCP films is detrimental to their operation under electric fields, and results in increased power consumption and ultimately in power shortage.

For LCP materials, such as polyacrylates and polyesters, which have a glass transition temperature Tg above ambient, it is found that localised heating by a laser beam produces an optically clear written spot or line. This is different from the response of LCP materials, such as the polysiloxanes, which have Tg below ambient and adopt a scattering texture when locally heated by a laser beam.

The clear written spot or line results from rapid cooling of the written material into the glass phase, so that the clear isotropic texture is quenched into the solid glass phase.

In consequence of these characteristics of the materials exhibited during writing, a device made therefrom must have a background of a dense scattering texture in order to obtain a negative contrast image. This can be achieved by cooling the material of the device through the liquid crystal phase in a manner such that it allows scattering to occur.

Since the LCP material does not require the application thereto of an electric field in order to produce a scattering texture or clear lines or spots, it is possible to make a device without electrodes. This results in a far simpler construction and is particularly advantageous when mass producing devices from a continuous web of material fed from a roll.

It is an object of the present invention to provide a process and apparatus for producing optical storage devices on a mass production scale from liquid crystal material.

According to one aspect of the invention there is provided a process for manufacturing an optical storage device, comprising the steps of depositing a film of a liquid crystal material along an elongate substrate; and feeding the substrate with the film thereon through a temperature-controlled region in which the temperature of the film is raised above the glass transition temperature of the liquid crystal material and subsequently lowered, whereby the material is initialised to an optimum light-scattering texture.

According to another aspect of the invention there is provided apparatus for manufacturing an optical storage device, comprising means to feed a strip of substrate material along a feed path; means to deposit a film of liquid crystal material along the substrate strip; and temperature control means along said path for heating the strip with the film thereon to a temperature above the glass transition temperature of the liquid crystal material and subsequently lowering the temperature, whereby the material is initialised to an optimum light-scattering texture.

The substrate with the initialised film thereon may be cut into portions, each for use as a respective optical storage device.

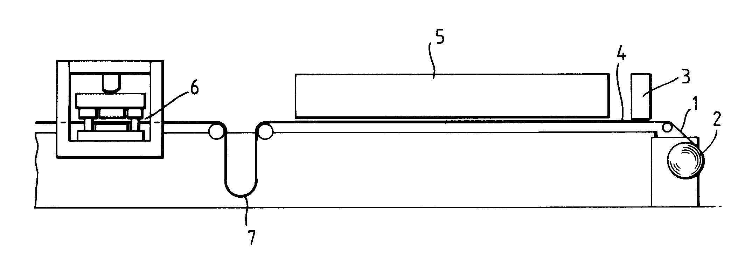

Embodiments of the invention will now be described, by way of example, with reference to the accompanying drawing, which is a schematic side view of apparatus for mass producing optical storage devices.

Referring to the drawing, a strip 1 of a flexible transparent plastics material, such as polyethylene terephthalate (PET), is drawn from a roll 2 of the material and is passed through a coating unit 3 which deposits on the strip a thin film 4 of a liquid crystal polymer. Preferably the thickness of the strip 1 for micrographics applications is around 75-100$\mu$m and that of the film 4 is in the range of 1-10$\mu$m, and preferably around 3-5$\mu$m. The thinness of the overall construction is important when the combined strip and film is to be used as an optical mass storage medium. It should then be of the minimum acceptable thickness so as to allow the maximum storage capacity per unit volume when sheets of the material are stacked up, but it must, on the other hand, be sufficiently thick to be easily handled. In general, however, the thickness of the strip and the film will be determined by the specific application of the resulting storage devices.

The film 4 may be formed by applying a liquid crystal polymer/ solvent solution to the strip 1 using a doctor blade, the strip being held under tension during the application of the solution. The solvent must, of course, be selected such that it does not attack the strip 1. Alternatively a hot melt LC material may be used.

Alternatively, the film 4 may be extruded on to the strip 1 or may be deposited by any other suitable coating technique.

After the coating, the material will not have the optimum scattering density, since there will be residual alignment of the polymer material due to the coating process. Furthermore, for hot melt or extruded films the material will have cooled quickly and will be partially or fully quenched, again giving a lower scattering density than would be possible with the material.

If a polymer in solvent solution is used for producing the film, the film must be subsequently dried. This may give rise to poor scattering.

For each coating technique it is therefore necessary to initialise the film to obtain the maxium possible scattering density in order to maximise the contrast of the film.

In order to initialise the film, the strip 1 with the film 4 thereon is passed through an oven 5, which thermally anneals the film. The length of the oven and the speed of travel of the strip through the oven are selected for optimum treatment of the particular LCP material. The film must be heated above the glass transition temperature $T_G$ and is then left in either the liquid crystal state or the isotropic state for an optimum period of time. This period will depend upon the type of polymer, the transition temperature of the polymer and the annealing temperature. There are a number of different methods for annealing liquid crystal polymer materials. These include:

(a) Heating the material into the isotropic state, maintaining the temperature for x minutes, where x will depend upon the particular material and the annealing temperature, and then cooling the material slowly through the liquid crystal phase into the glass phase.

(b) Heating the material into the liquid crystal state, maintaining the temperature for x minutes and then cooling the material to the glass phase.

(c) Heating the material into the isotropic state, maintaining the temperature for x minutes, cooling the material to the liquid crystal state, maintaining the temperature for x minutes, then cooling the material to the glass phase.

(d) Heating the material into the biphasic region, maintaining the temperature for x minutes and cooling the material slowly through the liquid crystal phase into the glass phase.

(e) Any combination of heating into the isotropic state, the liquid crystal phase and the biphasic region and maintaining the temperature for x minutes.

(f) Cyclically heating and cooling the material, for example heating the material into the isotropic state, maintaining the temperature for x minutes, cooling the material into the liquid crystal phase, reheating to the isotropic state and repeating the cycle. The material is finally cooled to the glass phase. Alternatively, the cycling can be effected between the liquid crystal phase and the glass phase.

The oven 5 will have heating and cooling regions disposed along its length in order to effect the required initialisation steps as the film 4 passes through it.

The strip 1 with the initialised film thereon is then passed through a die 6, which cuts the strip into required shapes, such as A6-size microfiches. A buffer loop 7 is provided between the oven 5 and the die 6. The manufacturing process can be entirely automated.

For the polyester materials which have been investigated it has been found that it is preferable to heat the material into the isotropic phase and maintain the temperature, in order to relax out any order induced by the coating operation. The time required will depend upon how far above the clearing point temperature Tc the material is annealed. The material is then preferably cooled into the liquid crystal phase and maintained at that temperature for a period of time sufficient to achieve a scattering texture in the material. Again the time will depend on how far the temperature is above Tg.

Further improvement may then be achieved by passing the material between the glass phase and the liquid crystal phase a number of times, for example between two and ten times.

Tests on a liquid crystal polymer material designated AFR 39 supplied by Akzo International Research B.V. of Arnhem, Netherlands have resulted in a possible initialisation process as indicated below. The results were obtained using laboratory samples of single sheets of material. It will be apparent that the temperatures and periods may be different for a mass production process. The material has Tg = 55°C and $T_c$ = 90°C. The process steps were

(1) Heat from room temperature to 100°C at a rate of 5°C/min

(2) Maintain at 100°C for 10-30 minutes

(3) Cool to 80°C at 5°C/min

(4) Maintain at 80°C for 10-30 minutes
(5) Cool to room temperature at 5°C/min
(6) Heat to 70°C at 5°C/min
(7) Cool to room temperature at 5°C/min
(8) Heat to 70°C at 5°C/min
(9) Cool to room temperature at 5°C/min.

LCP films produced by the process according to the invention can be used for many different applications, such as updatable and erasable microfilms, fiches, aperture cards, slides and tapes, larger recording media, such as A4 sheets (e.g. overhead projector sheets), and digital storage, such as optical cards, compact discs and computer data storage discs.

Since the film can be returned to a scattering texture by heating it into the isotropic or liquid crystal phase and applying a suitable temperature profile, it is possible to erase any information written thereon. This may be achieved by using a heater which heats the devices in bulk. Alternatively, it may be achieved locally by using a laser beam.

Although a flexible substrate may be preferable in many applications, the substrate might alternatively be rigid or semi-rigid. Appropriate modifications would then be made to the strip feeding arrangements.

**Claims**

1. A process for manufacturing an optical storage device, characterised by the steps of depositing a film (4) of a liquid crystal material along an elongate substrate (1); and feeding the substrate with the film thereon through a temperature-controlled region (5) in which the temperature of the film is raised above the glass transition temperature of the liquid crystal material and subsequently lowered, whereby the material is initialised to an optimum light-scattering texture.

2. A process as claimed in Claim 1, characterised in that the liquid crystal material is a liquid crystal polymer.

3. A process as claimed in Claim 1 or Claim 2, characterised in that in the temperature-controlled region (5) the film (4) is heated to its isotropic state and is maintained in that state for a predetermined period of time and is subsequently cooled at a controlled rate into its glass phase.

4. A process as claimed in Claim 1 or Claim 2, characterised in that in the temperature-controlled region (5) the film (4) is heated to its liquid crystal state, is maintained in that state for a predetermined period of time and is subsequently cooled at a controlled rate into its glass phase.

5. A process as claimed in Claim 1 or Claim 2, characterised in that in the temperature-controlled region (5) the film (4) is heated to its isotropic state and is maintained in that state for a predetermined period of time, is cooled to its liquid crystal state, is maintained in that state for a predetermined period of time, and is then cooled at a controlled rate to its glass phase.

6. A process as claimed in Claim 1 or Claim 2, characterised in that in the temperature-controlled region (5) the film (4) is heated to its biphasic region, is maintained in that region for a predetermined period of time and is cooled at a controlled rate through its liquid crystal state to its glass phase.

7. A process as claimed in Claim 1 or Claim 2, characterised in that in the temperature-controlled region (5) the film (4) is subjected to a plurality of heating/cooling cycles.

8. A process as claimed in Claim 7, characterised in that each heating/cooling cycle comprises heating the film to its isotropic state, maintaining it in that state for a predetermined period and cooling it into its liquid crystal state.

9. A process as claimed in Claim 7, characterised in that each heating/cooling cycle comprises heating the film (4) to its liquid crystal state and cooling it to its glass phase.

10. A process as claimed in any preceding claim, characterised in that the material is deposited on the substrate (1) as a liquid crystal/solvent solution.

11. A process as claimed in any one of Claims 1-9, characterised in that the material is deposited on the substrate as a hot melt.

12. A process as claimed in any one of Claims 1-9, characterised in that the material is extruded on to the substrate (1).

13. A process as claimed in any preceding claim, characterised in that the substrate (1) is formed of polyethylene terephthalate.

14. A process as claimed in any preceding claim, characterised in that after said initialisation step the substrate (1) with the initialised film (4) thereon is cut into portions, each for use as a respective optical storage device.

15. Apparatus for manufacturing an optical storage device, comprising means to feed a strip (1) of substrate material along a feed path; means (3) to deposit a film (4) of liquid crystal material along the substrate strip; and temperature control means (5) along said path for heating the strip with the film thereon to a temperature above the glass transition temperature of the liquid crystal material and subsequently lowering the temperature, whereby the material is initialised to an optimum light-scattering texture.